# EUROPÄISCHE PATENTSCHRIFT

(11) **EP 0 503 170 B1**
(45) Veröffentlichungstag und Bekanntmachung des Hinweises auf die Patenterteilung: **07.06.1995**
(21) Anmeldenummer: 91250061.8
(22) Anmeldetag: 08.03.1991
(51) Int. Cl.: B60R 16/02

(54) **Busorientiertes Multiplexsystem**
Bus-oriented multiplex system
Système de multiplexage à bus

(43) Veröffentlichungstag der Anmeldung: 16.09.1992
(73) Patentinhaber: SIEMENS AKTIENGESELLSCHAFT, 80333 München (DE)
(72) Erfinder: Schürmann, Bernhard, Dr. Ing., W-2880 Brake (DE)

(56) Entgegenhaltungen:
- EP-A- 0 313 196
- DE-C- 3 211 020

## Beschreibung

Die Erfindung liegt auf dem Gebiet der Übertragung von Informationen in einem lokalen Netzwerk und ist bei der sicherheitstechnischen Ausgestaltung eines busorientierten Multiplexsystems anzuwenden, daß mehrere über elektrisch betriebene Busleitungen an einen Datenbus angeschlossene Busstationen aufweist. Derartige lokale Netzwerke sind u.a. für Kraftfahrzeuge von Bedeutung.

Auf dem Gebiet der Informationsübertragung kommt den lokalen Netzwerken eine zunehmende Bedeutung zu. Beispielsweise werden solche lokalen Netzwerke auch für Kraftfahrzeuge entwickelt, um die vielfältigen Informationen der elektrisch betriebenen Aggregate angemessen verarbeiten zu können. Derartige, als "Bordnetze" bezeichneten Netzwerke, die u.a. als busorientierte Multiplexsysteme konzipiert sind (DE 37 30 468), müssen mit Rücksicht auf sicherheitstechnische Aspekte Fehler, die im Übertragungssystem auftreten, besonders sicher beherrschen können. So hat man u.a. bei einem lokalen Netzwerk mit mehreren über einen Datenbus miteinander verkoppelten Stationen vorgesehen, jede Station mit Fehlererkennungs- und Fehlerermittlungseinrichtungen zu versehen und die externen und/oder internen Fehlersignale stationsintern statistisch auszuwerten. Die aus der statistischen Auswertung gewonnene Diagnose kann zur Selbstabschaltung einer defekten Station führen (DE 37 19 293).

Defekte am Bordnetz eines Kraftfahrzeuges können vor allem bei Unfällen auftreten. Elektrisch betriebene Bordnetze sind dabei besonders durch Kurzschlüsse gefährdet. Um Treiberstufen, über die Verbraucher wie Relais, Lampen, Ventile, Motoren usw. ansteuerbar sind, im Kurzschlußfall gegen Zerstörung zu sichern, ist es bekannt, dem Leistungstransistor einen Überwachungskreis vorzuschalten, der bei Kurzschlußstrom selbsttätig die Ansteuerung des Leistungstransistors sperrt (DE 39 20 805).

Um bei einer Datenübertragungseinrichtung, die beispielsweise aus einer Steuerzentrale, einem Zweileiter-Datenbus und mehreren Reglern besteht, einen defekten Regler vom Datenbus trennen zu können, ist es weiterhin bekannt, mit der in der Zentrale angeordneten Registriereinrichtung zum Erfassen einer Blockierung der Datenverbindung ein Schaltungsglied zu koppeln, das bei Feststellung einer solchen Blockierung einen Strom auf den Datenbus schaltet; die Größe dieses Stromes überschreitet die Stromtragfähigkeit von Sicherungselementen, die sowohl in den einzelnen Reglern als auch in der Steuerzentrale angeordnet sind. Dieser Strom bringt in dem defekten Regler das Sicherungselement zum Ansprechen, wodurch der Regler vom Datenbus abgetrennt wird (DE 32 11 020).

Ausgehend von einem busorientierten Multiplexsystem mit den Merkmalen des Oberbegriffes des Patentanspruches 1 (DE 32 11 020) liegt der Erfindung die Aufgabe zugrunde, die Kurzschlußsicherheit des Multiplexsystems zu verbessern.

Zur Lösung dieser Aufgabe ist gemäß der Erfindung vorgesehen, daß die Sicherungselemente im Bereich eines Knotenpunktes angeordnet sind, an dem die Busleitungen zusammengeführt und dort über jeweils ein Sicherungselement miteinander verbunden sind.

Bei einem derart ausgebildeten Multiplexsystem wird im Fehlerfall nicht nur eine Busstation sondern auch die zugehörige, gegebenenfalls beschädigte Busleitung von dem gemeinsamen Datenbus abgetrennt, so daß nach dieser Abtrennung im verbliebenen intakten Teilsystem eine Kommunikation zwischen den Busstationen wieder aufgenommen werden kann. Die gemäß der Erfindung vorgesehene sicherheitstechnische Maßnahme ist für alle Systeme anwendbar, die eine oder mehrere Datenbusse für die Datenübertragung verwenden, gegebenenfalls auch mit unterschiedlichen Signalpegeln. Dabei ist lediglich vorauszusetzen, daß die Eingänge und die Ausgänge der angeschlossenen Busstationen zum gemeinsamen Datgenbus hin kurzschlußfest sind, wie es beispielsweise bei den üblicherweise für Kraftfahrzeuge ins Auge gefaßten Multiplexsystemen von den Kfz-Herstellern vorgeschrieben ist.

Bei Anwendung der Erfindung werden also auch die durch innere oder äußere Einwirkung kurzgeschlossenen Leitungsteile des Multiplexsystems durch gezielte Zerstörung von Sicherungselementen, welche die Leitungsteile miteinander verbinden, abgetrennt, um damit Teilnetze elektrisch voneinander zu trennen. Da in jede Busleitung ein solches Sicherungselement integriert ist, wird der mit dem dafür vorgesehenen Schaltungsglied angebotene Strom auf dem Weg des geringsten Widerstandes über das Sicherungselement nach Masse oder zu Batteriespannung abfließen und dadurch dieses Sicherungselement zerstören. Dadurch wird der Leitungsstrang, auf dem der Kurzschluß vorliegt, vom übrigen Netz abgetrennt und das übrige Netz wird wieder hochohmig, so daß sich der angebotene Strom auf einen niedrigen Wert reduziert. Damit können keine weiteren Sicherungselemente zerstört werden. Anschließend kann die Datenübertragung im restlichen Teilnetz wieder aufgenommen werden.

Eine gemäß der Erfindung vorgesehene Ausgestaltung des Multiplexsystems läßt sich besonders bei kleinen Systemen verwenden, die nur eine geringe Anzahl von Busstationen umfassen, beispielsweise zwei bis sechs Busstationen. Bei einer solchen Ausgestaltung kann man die Sicherungselemente gemeinsam in einem Stecker anordnen, in dem die Busleitungen der einzelnen Busstationen zusammengeführt und elektrisch verbunden werden (Bus-Splice-Stecker). Hierbei können die Sicherungsele in Hybridtechnik realisiert sein.

Das Schaltungsglied zum Aufschalten des Stromes kann je nach Auslegung des Systems entweder in den Bus-Splice-Stecker oder in die mit dem Registrierglied versehene Busstation integriert sein; im letztgenannten Fall ist es erforderlich, die Busleitung dieser Busstation nicht mit Sicherungselementen auszurüsten. Eine solche Anordnung ist dann möglich, wenn die Gefahr einer Beschädigung der Busleitung dieser Busstation nicht gegeben ist.

Ein Ausführungsbeispiel des gemäß der Erfindung verbesserten Multiplexsystems ist in den Figuren 1 bis 3 schematisch dargestellt. Dabei zeigt
- Figur 1: ein Multiplexsystem mit vier Busstationen und jeweils zwei Busleitungen,
- Figur 2: einen Bus-Splice mit Sicherungselementen ohne integrierte Stromaufschaltung und
- Figur 3: eine Baugruppe zur Aufschaltung eines Stromes auf die Busleitungen.

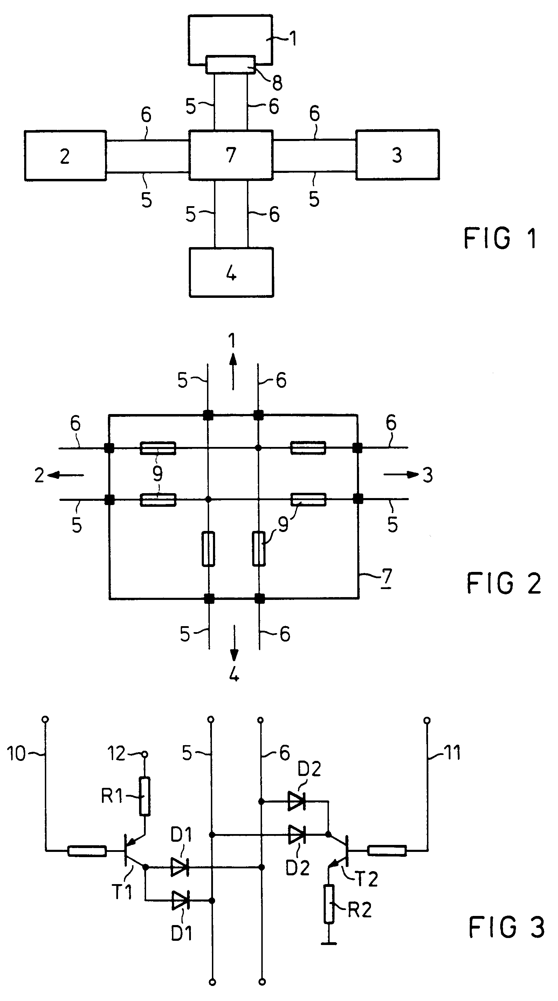

Gemäß Figur 1 besteht das Mulitplexsystem aus vier Busstationen 1 bis 4, die jeweils über Busleitungen 5 und 6 an einem Knotenpunkt 7 miteinander verbunden sind. Der Busstation 1 ist dabei in nicht näher bezeichneter Weise ein Registrierglied zur Erfassung des Fehlens der Datenverbindung zwischen den Busstationen zugeordnet. Weiterhin ist dieser Busstation 1 ein Schaltungsglied 8 zum Aufschalten eines Stroms auf die Busleitungen der Station 1 und damit auf den Knotenpunkt 7 des Datenbusses zugeordnet.

Gemäß Figur 2 sind in den Knotenpunkt Sicherungselemente 9 derart integriert, daß die Busleitungen 5/6 der Busstationen 2,3 und 4 abgesichert sind. Die Busleitungen der Station 1 sind ungesichert, weil dieser Busstation das Schaltungsglied zum Aufschalten eines Stromes zugeordnet ist. Sofern dieses Schaltungsglied dem Knotenpunkt 7 zugeordnet ist, der beispielsweise als Bus-Splice-Stecker ausgebildet sein kann, können auch die Busleitungen 5/6 zur Busstation 1 gesichert sein.

Eine Schaltung für die Ausführung des Schaltungsgliedes zum Aufschalten eines Stromes zeigt Figur 3. Dabei sind Steuerleitungen 10 und 11 vorgesehen, die mit der Registriereinrichtung in der Busstation 1 verbunden sind. Mittels Steuerimpulsen über diese Steuerleitungen kann den Busleitungen 5/6 ein Strom angeboten werden. Im Fall des Kurzschlusses einer Busleitung 5 oder 6 nach Masse fließt ein Strom von der Spannungsquelle 12 über den Widerstand R1, über den durch die Steuerleitung 10 angesteuerten Transistor T1 und über eine Diode D1 und ein Sicherungselement 9 im Bereich des Knotenpunktes 7 nach Masse. Im Fall des Kurzschlusses einer Busleitung 5 oder 6 zur Batteriespannung wird mittels der Ansteuerung über die Steuerleitung 11 Masse an die Busleitungen gelegt, so daß von der Kurzschlußstelle der defekten Busleitung ein Strom über das zugehörige Sicherungselement 9, eine Diode D2, den Transistor T2 und den Widerstand R2 nach Masse fließt. In jedem Fall ist nach Ansprechen des Registriergliedes die kurzgeschlossene, abgesicherte Busleitung beidseits ihres Sicherungselementes 9 mit den beiden Polen der Batterie verbunden, wodurch es zu einer Überlastung des Sicherungselementes und damit zum Abtrennen der kurzgeschlossenen Busleitung kommt.

Die Ansteuerung des Schaltungsgliedes 8 über die Steuerleitung 10 und 11 erfolgt gezielt über eine der beiden Steuerleitungen, sofern das Registrierglied die Art des Kurzschlusses feststellen kann. Sofern eine solche Feststellung nicht getroffen werden kann, werden beide Steuerleitungen nacheinander aktiviert.

## Patentansprüche

1. Busorientiertes Multiplexsystem mit mehreren Busstationen, die über elektrisch betriebene Busleitungen an einen Datenbus angeschlossen sind,
bei dem wenigstens eine Busstation mit einer ein Registrierglied enthaltenden Registriereinrichtung zum Erfassen einer Blockierung der Datenverbindung zwischen den Busstationen versehen ist
und bei dem in das Multiplexsystem ein mit der Registriereinrichtung gekoppeltes Schaltungsglied (8) integriert ist,
das bei Feststellung einer Blockierung der Datenverbindung durch das Registrierglied einen Strom auf den Datenbus schaltet, wobei die Größe dieses Stromes die Stromtragfähigkeit von Sicherungselementen (9) überschreitet, die den Busstationen zugeordnet sind,
**dadurch gekennzeichnet,**
daß die Sicherungselemente (9) im Bereich eines Knotenpunktes (7) angeordnet sind, an dem die Busleitungen (5,6) zusammengeführt und dort über jeweils ein Sicherungselement miteinander verbunden sind.

2. Multiplexsystem nach Anspruch 1,
**dadurch gekennzeichnet,**
daß die Sicherungselemente (9) gemeinsam in einem Bus-Splice-Stecker (7) angeordnet sind.

3. Multiplexsystem nach Anspruch 2,
**dadurch gekennzeichnet,**
daß das Schaltungsglied (8) zum Aufschalten eines Stromes auf den Datenbus in den Bus-Splice-Stecker integriert ist.

4. Multiplexsystem nach Anspruch 2,
**dadurch gekennzeichnet,**
daß das Schaltungsglied (8) zum Aufschalten eines Stromes auf den Datenbus gemeinsam mit dem Registrierglied einer Busstation (1) zugeordnet ist, wobei die Busleitung (5,6) dieser Busstation ungesichert ist.

## Claims

1. Bus-orientated multiplex system with several bus stations that are connected to a data bus via electrically-operated bus lines, in which bus-orientated multiplex system at least one bus station is provided with a recording device containing a recording element for detecting a blocking of the data link between the bus stations, and in which bus-orientated multiplex system a circuit element (8) coupled to the recording device is integrated into the multiplex system, which bus-orientated multiplex system switches a current to the data bus when a blocking of the data link is established by the recording element, the magnitude of this current exceeding the current-carrying capacity of fuse elements (9) which are assigned to the bus stations, **characterised in that** the fuse elements (9) are arranged in the region of a nodal point (7) at which the bus lines (5, 6) are concentrated and at which point they are each interconnected via a fuse element.

2. Multiplex system according to Claim 1,
**characterised in that** the fuse elements (9) are arranged in a common bus splice connector (7).

3. Multiplex system according to Claim 2,
**characterised in that** the circuit element (8) for impressing a current onto the data bus is integrated into the bus splice connector.

4. Multiplex system according to Claim 2,
**characterised in that** the circuit element (8) for impressing a current onto the data bus is jointly assigned to the recording element of a bus station (1), the bus line (5, 6) of this bus station being unprotected.

## Revendications

1. Système de multiplexage basé sur un bus qui comporte plusieurs postes qui sont raccordés à un bus de transmission de données, par l'intermédiaire de lignes formant bus, qui fonctionnent électriquement,
dans lequel au moins un poste du bus est équipé d'un dispositif d'enregistrement qui comporte un circuit d'enregistrement et sert à détecter un blocage de la liaison de données entre les postes du bus, et
dans lequel un circuit (8), accouplé au dispositif d'enregistrement, est intégré dans le système de multiplexage, et
qui, lors de la détermination d'un blocage de la liaison de transmission de données par le circuit d'enregistrement, envoie un courant dans le bus de transmission de données, courant dont l'intensité dépasse la capacité de conduction de courant de fusibles (9), qui sont associés au poste du bus, caractérisé par le fait
que les fusibles (9) sont disposés dans la zone d'un noeud (7), auquel se raccordent les lignes formant bus (5,6), qui sont reliées entre elles, en cet endroit, par l'intermédiaire respectivement d'un fusible.

2. Système de multiplexage suivant la revendication 1, caractérisé par le fait que les fusibles (9) sont disposés en commun dans un connecteur Bus-Splice (7).

3. Système de multiplexage suivant la revendication 2, caractérisé par le fait que le circuit (8) servant à interrompre un courant dans le bus de transmission de données est intégré dans le connecteur Bus-Splice.

4. Système de multiplexage suivant la revendication 2, caractérisé par le fait que le circuit (8) servant à interrompre un courant dans le bus de transmission de données est associé, en commun avec le circuit d'enregistrement, à un poste (1) du bus, la ligne formant bus (5,6) de ce poste du bus n'étant pas protégée.
